# EUROPEAN PATENT SPECIFICATION

(11) **EP 1 535 124 B1**
(45) Date of publication and mention of the grant of the patent: **02.02.2011**
(21) Application number: 02755462.5
(22) Date of filing: 13.08.2002
(51) Int. Cl.: G06F 21/00

(54) **COMPUTER ARCHITECTURE FOR EXECUTING A PROGRAM IN A SECURE OF INSECURE MODE**
COMPUTERARCHITEKTUR FÜR DIE DURCHFÜHRUNG EINES PROGRAMMS IN EINEM SICHEREN ODER UNSICHEREN MODUS
ARCHITECTURE INFORMATIQUE PERMETTANT D'EXECUTER UN PROGRAMME DANS UN MODE SECURISE OU NON SECURISE

(43) Date of publication of application: 01.06.2005
(73) Proprietor: Nokia Corporation, 02150 Espoo (FI)
(72) Inventor: PAATERO, Lauri, FIN-00970 Helsinki (FI); KIIVERI, Antti, FIN-90550 Oulu (FI)
(74) Representative: Lind, Urban Arvid Oskar
(86) International application number: PCT/IB2002/003216
(87) International publication number: WO 2004/015553

(56) References cited:
- EP-A- 0 930 567
- EP-A- 1 225 498
- EP-A- 1 262 856
- US-A- 5 737 760
- US-A- 5 974 549

## Description

### Technical Field of the Invention

The present invention relates to circuitry for providing data security, which circuitry contains at least one processor and at least one storage circuit. The present invention also relates to a method for providing data security in circuitry containing at least one processor and at least one storage circuit.

### Background Art

Various electronic devices, such as mobile telecommunication terminals, portable computers and PDAs require access to security related components such as application programs, cryptographical keys, cryptographical key data material, intermediate cryptographical calculation results, passwords, authentication of externally downloaded data etc. It is often necessary that these components, and the processing of them, is kept secret within the electronic device. Ideally, they shall be known by as few people as possible. This is due to the fact that a device, for example a mobile terminal, could possibly be tampered with if these components are known. Access to these types of components might aid an attacker with the malicious intent to manipulate a terminal.

Further, in the devices, these above mentioned security related components will be handled, processed and managed alongside more general components which do not require any secure processing. Therefore, a secure execution environment is introduced in which environment a processor within the electronic device is able to access the security related components. Access to the secure execution environment, processing in it and exit from it should be carefully controlled. Prior art hardware comprising this secure environment is often enclosed within a tamper resistant packaging. It should not be possible to probe or perform measurements and tests on this type of hardware which could result in the revealing of security related components and the processing of them.

An electronic device processing information in a secure environment and storing security related information in a secure manner is shown in US patent No. 5,892,900. The patent discloses a virtual distribution environment securing, administering and controlling electronic information use. It comprises a rights protection solution for distributors, financial service providers, end-users and others. The invention uses electronic devices called Secure Processing Units to provide security and secure information storage and communication. Such a device, including a processor, is enclosed within a "tamper resistant security barrier", separating the secure environment from the outer world. The electronic device provides both the secure environment and an unsecure environment, in which latter case the processor of the device has no access to the security related information.

A problem that has to be solved is to enable for a third party to perform testing, debugging and servicing of the electronic device and its software without risking that the third party is given access to information which makes it possible to manipulate the security related components of the device so as to affect the security functions when in the secure environment. It should be possible to move between the two environments smoothly, without having to initialize one or the other every time a movement is effected.

Document EP-A-1262856 represents a prior art document according to Article 54(3) EPC. Document US-A-5737760 discloses microcontroller working in a secure mode or a non secure mode as indicated by a control register. The microcontroller provides security for internal instructions and data stored in a ROM while allowing instruction fetches to external, off-chip memory connected to an expansion bus. If access is done to ROM, the security logic is put in a first operating mode called non secure mode wherein the security circuitry allows access of instructions to both memories. Once the CPU of the microcontroller performs an access to an instruction off chip (via the expansion bus), the security logic is put in a secure mode wherein access to the ROM is not allowed by a user having access to the ROM via the expansion bus.

### Summary of the Invention

It is an object of the present invention to provide a solution to the above given problem by proposing an architecture comprising a secure environment in which it is possible to store and process information such as cryptographical keys and other security related data in a secure way and still making it possible to test and debug the architecture and its accompanying software in an unsecure environment without giving access to the security data.

This object is attained by the invention in a first aspect in the form of circuitry for providing data security, which circuitry contains at least one processor and at least one storage circuit according to claim 1 and in a second aspect in the form of a method for providing data security in circuitry containing at least one processor and at least one storage circuit according to claim 6. Preferred embodiments are defined by the dependent claims.

A first aspect of the invention, is concerned with circuitry comprising at least one storage area in a storage circuit, in which storage area protected data relating to circuitry security are located. The circuitry is arranged with mode setting means arranged to place a processor comprised in the circuitry in one of at least two different operating modes, the mode setting means being capable of altering the processor operating modes. Further, it comprises storage circuit access control means arranged to control the processor to gain access to the storage area in which protected data are located based on a first processor operating mode, and arranged to prevent the processor from accessing the storage area in which protected data are located, based on a second processor operating mode, thereby enabling the processor to execute non-verified software downloaded into the circuitry.

A second aspect of the invention is concerned with, a method wherein protected data relating to circuitry security is stored in a storage circuit. A processor is set in one of at least two different alterable operating modes. The method further comprises the step of enabling the processor to access a storage area in which the protected data are located by setting the processor in a first operating mode and preventing the processor from accessing the storage area in which protected data are located by setting the processor in a second operating mode, thereby enabling the processor to execute non-verified software downloaded into the circuitry.

The invention is based on the idea that circuitry is provided in which a processor is operable in at least two different modes, one first secure operating mode and one second unsecure operating mode. In the secure mode, the processor has access to security related data located in various memories located within the circuitry. The security data include cryptographical keys and algorithms, software for booting the circuitry, secret data such as random numbers used as cryptographical key material, application programs etc. The circuitry can advantageously be used in mobile telecommunication terminals, but also in other electronic devices such as computers, PDAs or other devices with need for data protection. In the case where the circuitry is placed within a mobile telecommunication terminal, it might be desirable that the circuitry provides the terminal with a unique identification number and accompanying keys for cryptographic operations on the identification number. The access to these security data and the processing of them need to be restricted, since an intruder with access to security data could manipulate the terminal. When testing and/or debugging the terminal, access to security information is not allowed. For this reason, the processor is placed in the unsecure operating mode, in which mode it is no longer given access to the protected data.

The invention advantageously enables the processor of the circuitry to execute non-verified software downloaded into the circuitry. This allows testing, debugging and servicing of the electronic device and its software without risking that a third party is given access to information which makes it possible to manipulate the security related components of the device so as to affect the security functions when in the secure environment.

It should be noted that in US patent No. 5,892,900, the unsecure mode is the "normal" mode, used when transactions and communications must be secure, whereas in the present invention, the secure mode is the normal mode. In the present invention, unsecure mode is only entered during testing and/or debugging or other types of special cases when security data must be protected, i.e. when secure mode can not be practically maintained.

The present invention eliminates the use for special purpose terminals adapted for use in research and development. During a development stage, it is sometimes a requirement to be able to download untrusted and/or unchecked code into terminals. By enabling the unsecure mode, a channel is provided into the terminal without giving access to security related components. Consequently, the same terminal can be utilized for normal operation as well as in the development stage. It should be understood that it is rather expensive to manufacture special purpose terminals.

According to an embodiment of the invention, the circuitry of the invention is arranged with a timer controlling the time period during which the processor is in the unsecure mode. If other security controlling actions should fail, a maximum given time period is set during which access is given to unsecure processor mode. This restrains the possibility for an intruder to perform debugging and testing of the device.

According to the invention, authentication means are provided, which means being arranged to authenticate data externally provided to the terminal. An advantage with this feature is that during the manufacturing stage, and other stages where normal, secure operating mode is not yet activated, the terminal can be used for a limited time period, sufficient to load accepted, signed code into the terminal. It is also possible to download signed code packages into the terminal during secure mode operation. This facilitates the possibility to add new security features to the terminal, bringing flexibility to the architecture. The architecture enables the applications to be divided into secure and unsecure parts. The circuit checks the code packages which are signed appropriately. Secure applications are downloaded to, and executed from, the storage area holding the protected data. This makes downloading of data smoother. If this feature was not present, it would be necessary to download secure applications and unsecure applications separately.

According to yet another embodiment of the invention, the circuitry is arranged with means for indication of the mode in which the processor is operating. It is appropriate that a mode register is set within the circuitry, keeping track of the current mode. In case the circuitry is arranged within a mobile telecommunication terminal, it should be possible to indicate on the terminal display, via the terminal loudspeaker or in any other visual way, to a terminal user the fact that the terminal is operating in unsecure mode. This will draw the user's attention to the fact that unsecure mode has been entered.

In accordance to further embodiments of the present invention, the mode setting means arranged to control the modes of the processor comprise an application program. This has the advantage that the mode could be set by the device itself, not having to rely on external signals. From a security viewpoint, this is preferable since by controlling the application software, the setting of processor modes can also be controlled. It is also possible to have an external signal connected to the circuitry, by which signal it is possible to control the processor mode. By using an external signal, a mode change can be executed easy and fast, which can be advantageous in test environments. A combination of these two mode setting means is feasible.

### Brief Description of the Drawings

The present invention will be described in greater detail with reference to the following drawings, wherein:
Fig. 1 shows a block scheme of a preferred embodiment of circuitry for providing data security according to the present invention; and
Fig. 2 shows a flow chart of a boot process for the circuitry according to the present invention.

### Description of Preferred Embodiments of the Invention

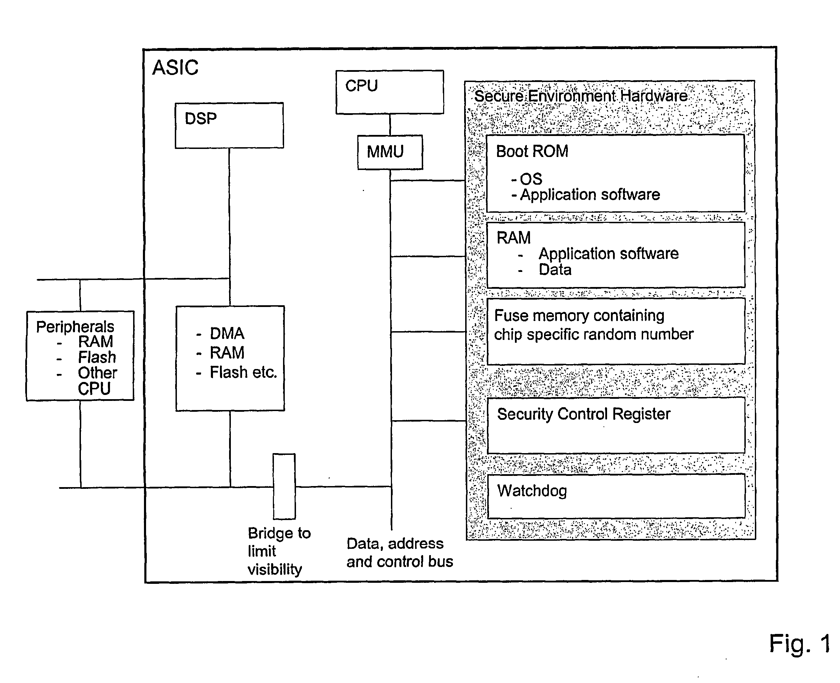

Fig. 1 shows a block scheme of a preferred embodiment of the present invention. As can be seen, the architecture in Fig. 1 contains both software and hardware. The architecture is implemented in the form of an ASIC (Application Specific Integrated Circuit). The processing part of the architecture contains a CPU and a digital signal processor DSP. These two processor can be merged into one single processor. Normally the CPU handles communication operations and the DSP handles the computation of data.

The secure environment comprises a ROM from which the ASIC is booted. This ROM contains boot application software and an operating system OS. The operating system controls and executes applications and offers various security services to the applications such as control of application software integrity and access control. The operating system has access to the ASIC hardware and it cannot itself provide rigorous hardware security, but it must rely on the security architecture.

Certain application programs residing in the secure environment, i.e. the protected data storage area, has precedence over other application programs. In a mobile telecommunication terminal, in which the ASIC can be arranged, a boot software should exist, which software includes the main functionality of the terminal. It is not possible to boot the terminal to normal operating mode without this software. This has the advantage that by controlling this boot software, it is also possible to control the initial activation of every terminal.

The secure environment also comprises RAM for storage of data and applications. The RAM preferably stores so called protected applications, which are smaller size applications for performing security critical operations inside the secure environment. Normally, the way to employ protected applications is to let "normal" applications request services from a certain protected application. New protected applications can be downloaded into the secure environment at any time, which would not be the case if they would reside in ROM. Secure environment software controls the download and execution of protected applications. Only signed protected applications are allowed to run. The protected applications can access any resources in the secure environment and they can also communicate with normal applications for the provision of security services.

In the secure environment, a fuse memory is comprised containing a unique random number that is generated and programmed into the ASIC during manufacturing. This random number is used as the identity of a specific ASIC and is further employed to derive keys for cryptographic operations. Further, storage circuit access control means in the form of a security control register is arranged. The purpose of the security control register is to give the CPU access to the secure environment, or preventing the CPU from accessing the secure environment, depending on the mode set in the register. The processor operating modes can be set in the register by application software, resulting in the fact that the architecture does not have to rely on external signals. From a security viewpoint, this is preferable since by controlling the application software, the setting of processor modes can also be controlled. It is also possible to have an external signal (not shown) connected to the ASIC, by which signal it is possible to set the security control register. By using an external signal, a mode change can be executed easy and fast, which can be advantageous in test environments. A combination of these two mode setting means is feasible.

Preferably, the mobile telecommunication terminal should indicate on the terminal display, via the terminal loudspeaker or in any other visual way, to a terminal user the fact that the terminal is operating in unsecure mode. This will make the user aware of the fact that unsecure mode has been entered.

A watchdog is arranged for various timer purposes. In case signature verification of downloaded software fails, checksums does not match or some other error is detected, the operation of the ASIC, or the mobile telecommunication terminal it is arranged in, should stop. This should preferably not be done immediately when the error occurs. A random timeout, e.g. different time spans up to 30 seconds, is desired. This makes it more difficult for an attacker to detect the instant at which the terminal has detected the error. The disabling of watchdog updating is set in the security control register. The result of this operation is that the terminal will reset itself. The watchdog can also control the time period during which the processor is in the unsecure mode. If other security controlling actions should fail, a maximum given time period is set during which access is given to unsecure processor mode. This restrains the possibility for an intruder to perform debugging and testing of the device.

The CPU is connected to the secure environment hardware via a memory management unit MMU that handles memory operations. It also maps virtual addresses to physical addresses in memory for processes executed in the CPU. The MMU is located on a bus containing data, address and control signals. It is also possible to have a second MMU arranged to handle the memory operations for the ASIC RAM located outside the secure environment. A standard bridge circuit for limitation of data visibility on the bus is arranged within the ASIC. The architecture should be enclosed within a tamper resistant packaging. It should not be possible to probe or perform measurements and tests on this type of hardware which could result in the revealing of security related components and the processing of them. The DSP has access to other peripherals such as a direct memory access (DMA) unit. DMA is provided by the architecture to allow data to be sent directly from the DSP to a memory. The DSP is freed from involvement with the data transfer, thus speeding up overall operation. Other peripherals such as RAMS, flash memories and additional processors can be provided outside the ASIC. A RAM is also arranged outside the secure environment in the ASIC, which RAM holds the non-verified software executed by the CPU.

By providing the above described architecture in which the CPU is operable in two different modes, one secure operating mode and one unsecure operating mode, the CPU of the architecture can be enabled to execute non-verified software downloaded into the ASIC. This is due to the fact that only verified software has access to the secure environment. This allows testing, debugging and servicing of the mobile telecommunication terminal and its software without risking that a third party is given access to information which makes it possible to manipulate the security related components of the device so as to affect the security functions when in the secure environment.

In the secure mode, the processor has access to security related data located within the secure environment. The security data include cryptographical keys and algorithms, software for booting the circuitry, secret data such as random numbers used as cryptographical key material, application programs etc. The circuitry can advantageously be used in mobile telecommunication terminals, but also in other electronic devices such as computers, PDAs or other devices with need for data protection. The access to these security data and the processing of them need to be restricted, since an intruder with access to security data could manipulate the terminal. When testing and/or debugging the terminal, access to security information is not allowed. For this reason, the processor is placed in the unsecure operating mode, in which mode it is no longer given access to the protected data within the secure environment.

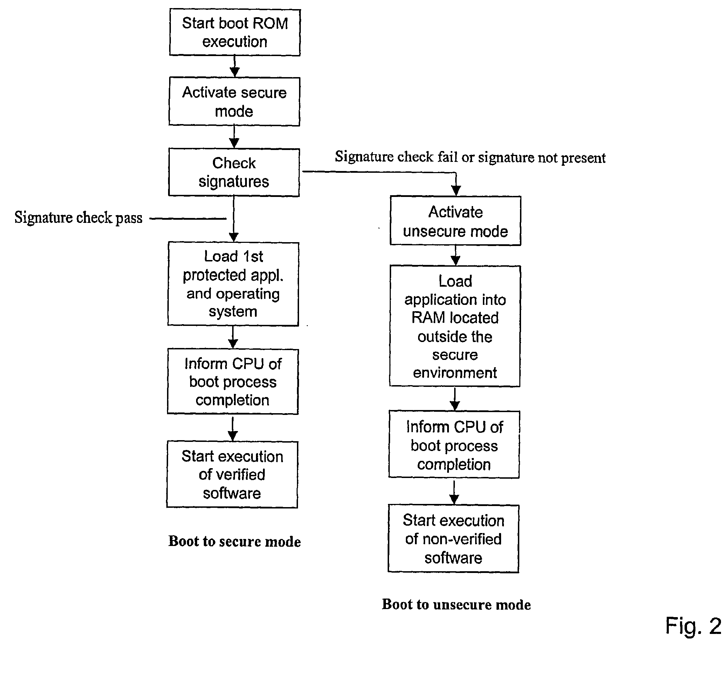

Fig. 2 illustrates a flow chart of the power up boot process for the architecture. At power up, ROM boot software activates secure mode for initial configuration. Then, signatures for the first protected application and operating system to be downloaded are checked. If the signatures are correct, the application and the operating system is downloaded into the secure environment RAM. When the desired software has been downloaded, the CPU is informed that the download is completed and the CPU starts executing the verified software. The operating system and protected application have thus been downloaded into the secure environment in a secure and trusted manner.

However, if the signature check fails or if no signature is present, unsecure mode is activated and the non-verified application is loaded into the ASIC RAM located outside the secure environment. Possibly, the watchdog is set to limit the time period during which the unsecure mode is activate. A maximum time period is set during which the unsecure mode is active. When boot is completed, this non-verified application is executed by the CPU. The secure environment is now inaccessible.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. Circuitry for providing data security, which circuitry contains at least one processor and at least one storage circuit and which circuitry comprises:
at least one storage area in said storage circuit, in which storage area protected data relating to circuitry security are located;
mode setting means arranged to set storage circuit access control means to indicate one of at least two different processor operating modes, the mode setting means being capable of altering the processor operating mode of the processor;
said storage circuit access control means arranged to control the processor to operate in a first processor operating mode or a second processor operating mode of said at least two different operating modes,
the first operating mode enables said processor access said storage area in which said protected data are located and the second operating mode prevents said processor from accessing said storage area in which said protected data are located, wherein said processor manages all accesses to said storage area to protect said protected data located in said storage area,
**characterized in that**
authentication means arranged, at power up, to authenticate, by signature checking, a non verified software downloaded to the circuitry in said first operating mode;
wherein said processor operating mode is set to said second processor operating mode when a non verified software to be downloaded has not been authenticated in said authentication means
thereby enabling said at least one processor to execute non-verified software downloaded into the circuitry.

2. The circuitry for providing data security according to claim 1, further comprising:
a timer arranged to control the time period during which the processor is in said second operating mode.

3. The circuitry for providing data security according to any of the preceding claims, further comprising:
means arranged to indicate in which mode the processor is operating.

4. The circuitry for providing data security according to any of the preceding claims, wherein said mode setting means comprise an application program.

5. The circuitry for providing data security according to any of the preceding claims, which circuitry is comprised in a mobile telecommunication terminal.

6. A method for providing data security in a circuitry containing at least one processor and at least one storage circuit and which method comprises the steps of:
storing protected data relating to circuitry security in at least one storage area in said storage circuit,
setting storage circuit access control means to indicate one of at least two different processor operating modes, the mode setting means being capable of altering the processor operating mode of the processor;
controlling by said storage circuit access control means the processor to operate in a first processor operating mode or a second processor operating mode of said at least two different operating modes,
wherein the first operating mode enables said processor access said storage area in which said protected data are located and the second operating mode prevents said processor from accessing said storage area in which said protected data are located, and wherein said processor manages all accesses to said storage area to protect said protected data located in said storage area,
**characterized by** the steps of:
at power up, authenticating by signature checking a non verified software downloaded to the circuitry in said first operating mode;
setting said processor operating mode to said second processor operating mode when a non-verified software to be downloaded has not been authenticated in said authenticating step,
thereby enabling said at least one processor to execute non-verified software downloaded into the circuitry.

7. The method for providing data security according to claim 6, further comprising the step of:
controlling the time period during which the processor is in said second operating mode by means of a timer.

8. The method for providing data security according to any of claims 6-7, further comprising the step of:
indicating in which mode the processor is operating.

9. The method for providing data security according to any of claims 6-8, wherein the setting of said processor in one of at least two different alterable operating modes is performed by means of an application program.

10. The method for providing data security according to any of claims 6-9, wherein the circuitry containing at least one processor and at least one storage circuit is comprised in a mobile telecommunication terminal.

## Patentansprüche

1. Schaltungsaufbau zum Bereitstellen von Datensicherheit, wobei der Schaltungsaufbau mindestens einen Prozessor und mindestens einen Speicherschaltkreis enthält und wobei der Schaltungsaufbau Folgendes umfasst:
mindestens einen Speicherbereich in dem Speicherschaltkreis, wobei sich in dem Speicherbereich geschützte Daten über Schaltungssicherheit befinden;
ein Moduseinstellmittel, das dafür ausgelegt ist, ein Speicherschaltkreis-Zugriffssteuerungsmittel einzustellen, um einen von mindestens zwei verschiedenen Prozessorbetriebsmodi einzustellen, wobei das Moduseinstellmittel in der Lage ist, den Prozessorbetriebsmodus des Prozessors zu ändern;
wobei das Speicherschaltkreis-Zugriffssteuerungsmittel dafür ausgelegt ist, den Prozessor so zu steuern, in einem ersten Prozessorbetriebsmodus oder einem zweiten Prozessorbetriebsmodus der mindestens zwei verschiedenen Betriebsmodi zu arbeiten,
wobei der erste Betriebsmodus es dem Prozessor ermöglicht, auf den Speicherbereich, in dem sich die geschützten Daten befinden, zuzugreifen, und der zweite Betriebsmodus den Prozessor daran hindert, auf den Speicherbereich, in dem sich geschützte Daten befinden, zuzugreifen, wobei der Prozessor alle Zugriffe auf den Speicherbereich verwaltet, um die in dem Speicherbereich geschützten Daten zu schützen,
**dadurch gekennzeichnet, dass**
ein Authentifizierungsmittel dafür ausgelegt ist, beim Einschalten mittels einer Signaturüberprüfung eine nicht-verifizierte Software zu authentifizieren, die in dem ersten Betriebsmodus zu dem Schaltungsaufbau heruntergeladen wurde;
wobei der Prozessorbetriebsmodus in den zweiten Prozessorbetriebsmodus geschaltet wird, wenn eine herunterzuladende nicht-verifizierte Software noch nicht in dem Authentifizierungsmittel authentifiziert wurde,
wodurch der mindestens eine Prozessor in die Lage versetzt wird, in den Schaltungsaufbau heruntergeladene Software auszuführen.

2. Schaltungsaufbau zum Bereitstellen von Datensicherheit nach Anspruch 1, der des Weiteren Folgendes umfasst:
einen Timer, der dafür ausgelegt ist, den Zeitraum zu steuern, während dem der Prozessor sich in dem zweiten Betriebsmodus befindet.

3. Schaltungsaufbau zum Bereitstellen von Datensicherheit nach einem der vorangehenden Ansprüche, der des Weiteren Folgendes umfasst:
ein Mittel, das dafür ausgelegt ist anzuzeigen, in welchem Modus der Prozessor arbeitet.

4. Schaltungsaufbau zum Bereitstellen von Datensicherheit nach einem der vorangehenden Ansprüche, wobei das Moduseinstellmittel ein Anwendungsprogramm umfasst.

5. Schaltungsaufbau zum Bereitstellen von Datensicherheit nach einem der vorangehenden Ansprüche, wobei der Schaltungsaufbau in einem Mobilkommunikations-Endgerät enthalten ist.

6. Verfahren zum Bereitstellen von Datensicherheit in einem Schaltungsaufbau, der mindestens einen Prozessor und mindestens einen Speicherschaltkreis enthält, und wobei das Verfahren folgende Schritte enthält:
Speichern geschützter Daten über Schaltungssicherheit in mindestens einem Speicherbereich in dem Speicherschaltkreis,
Einstellen eines Speicherschaltkreis-Zugriffssteuerungsmittels dafür, einen von mindestens zwei verschiedenen Prozessorbetriebsmodi anzuzeigen, wobei das Moduseinstellmittel in der Lage ist, den Prozessorbetriebsmodus des Prozessors zu ändern;
Steuern des Prozessors mittels des Speicherschaltkreis-Zugriffssteuerungsmittels, in einem ersten Prozessorbetriebsmodus oder einem zweiten Prozessorbetriebsmodus der mindestens zwei verschiedenen Betriebsmodi zu arbeiten,
wobei der erste Betriebsmodus es dem Prozessor ermöglicht, auf den Speicherbereich, in dem sich die geschützten Daten befinden, zuzugreifen, und der zweite Betriebsmodus den Prozessor daran hindert, auf den Speicherbereich, in dem sich geschützte Daten befinden, zuzugreifen, wobei der Prozessor alle Zugriffe auf den Speicherbereich verwaltet, um die in dem Speicherbereich geschützten Daten zu schützen,
**gekennzeichnet durch** folgende Schritte:
beim Einschalten mittels einer Signaturüberprüfung eine nicht-verifizierte Software zu authentifizieren, die in dem ersten Betriebsmodus zu dem Schaltungsaufbau heruntergeladen wurde;
Schalten des Prozessorbetriebsmodus' in den zweiten Prozessorbetriebsmodus, wenn eine herunterzuladende nicht-verifizierte Software noch nicht in dem Authentifizierungsmittel authentifiziert wurde,
wodurch der mindestens eine Prozessor in die Lage versetzt wird, in den Schaltungsaufbau heruntergeladene Software auszuführen.

7. Verfahren zum Bereitstellen von Datensicherheit nach Anspruch 6, der des Weiteren folgenden Schritt umfasst:
Steuern des Zeitraums, während dem der Prozessor sich in dem zweiten Betriebsmodus befindet, mit Hilfe eines Timers.

8. Verfahren zum Bereitstellen von Datensicherheit nach einem der Ansprüche 6-7, das des Weiteren folgenden Schritt umfasst:
Anzeigen, in welchem Modus der Prozessor gerade arbeitet.

9. Verfahren zum Bereitstellen von Datensicherheit nach einem der Ansprüche 6-8, wobei das Versetzen des Prozessors in einen von mindestens zwei verschiedenen änderbaren Betriebsmodi mittels eines Anwendungsprogramms ausgeführt wird.

10. Verfahren zum Bereitstellen von Datensicherheit nach einem der Ansprüche 6-9, wobei der Schaltungsaufbau, der mindestens einen Prozessor und mindestens einen Speicherschaltkreis enthält, in einem Mobilkommunikations-Endgerät enthalten ist.

## Revendications

1. Circuit destiné à assurer la sécurité de données, lequel circuit contient au moins un processeur et au moins un circuit de stockage et lequel circuit comprend :
au moins une zone de stockage dans ledit circuit de stockage, dans laquelle zone de stockage sont stockées les données protégées relatives à la sécurité du circuit ;
un moyen de réglage de mode agencé pour régler un moyen de contrôle d'accès au circuit de stockage pour indiquer l'un d'au moins deux modes d'exploitation de processeur différents, le moyen de réglage de mode étant capable de modifier le mode d'exploitation de processeur du processeur ;
ledit moyen de contrôle d'accès au circuit de stockage étant agencé pour commander au processeur de fonctionner dans un premier mode d'exploitation de processeur ou dans un deuxième mode d'exploitation de processeur parmi lesdits au moins deux modes d'exploitation différents,
le premier mode d'exploitation permet au dit processeur d'accéder à ladite zone de stockage dans laquelle se trouvent lesdites données protégées et le deuxième mode d'exploitation empêche au dit processeur d'accéder à ladite zone de stockage dans laquelle se trouvent lesdites données protégées, dans lequel ledit processeur gère tous les accès à ladite zone de stockage pour protéger lesdites données protégées situées dans ladite zone de stockage,
**caractérisé par**
un moyen d'authentification agencé, à la mise sous tension, pour authentifier, par contrôle de signature, un logiciel non vérifié téléchargé sur le circuit dans ledit premier mode d'exploitation ;
dans lequel ledit mode d'exploitation de processeur est réglé sur ledit deuxième mode d'exploitation de processeur lorsqu'un logiciel non vérifié à télécharger n'a pas été authentifié dans ledit moyen d'authentification
ce qui permet au dit au moins un processeur d'exécuter le logiciel non vérifié téléchargé dans le circuit.

2. Circuit destiné à assurer la sécurité de données selon la revendication 1, comprenant en outre :
une temporisation agencée pour contrôler la période de temps au cours de laquelle le processeur se trouve dans ledit deuxième mode d'exploitation.

3. Circuit destiné à assurer la sécurité de données selon l'une quelconque des revendications précédentes, comprenant en outre :
un moyen agencé pour indiquer dans quel mode d'exploitation se trouve le processeur.

4. Circuit destiné à assurer la sécurité de données selon l'une quelconque des revendications précédentes, dans lequel ledit moyen de réglage de mode comprend un programme d'application.

5. Circuit destiné à assurer la sécurité de données selon l'une quelconque des revendications précédentes, dans lequel le circuit est compris dans un terminal de télécommunications mobiles.

6. Procédé destiné à assurer la sécurité de données dans un circuit contenant au moins un processeur et au moins un circuit de stockage et lequel procédé comprend les étapes de :
le stockage des données protégées relatives à la sécurité du circuit dans au moins une zone de stockage dans ledit circuit de stockage ;
le réglage d'un moyen de contrôle d'accès au circuit de stockage pour indiquer l'un d'au moins deux modes d'exploitation de processeur différents, le moyen de réglage de mode étant capable de modifier le mode d'exploitation de processeur du processeur ;
la commande par ledit moyen de contrôle d'accès au circuit de stockage au processeur de fonctionner dans un premier mode d'exploitation de processeur ou dans un deuxième mode d'exploitation de processeur parmi lesdits au moins deux modes d'exploitation différents,
dans lequel le premier mode d'exploitation permet au dit processeur d'accéder à ladite zone de stockage dans laquelle se trouvent lesdites données protégées et le deuxième mode d'exploitation empêche au dit processeur d'accéder à ladite zone de stockage dans laquelle se trouvent lesdites données protégées, et dans lequel ledit processeur gère tous les accès à ladite zone de stockage pour protéger lesdites données protégées situées dans ladite zone de stockage,
**caractérisé par** les étapes de :
à la mise sous tension, l'authentification, par contrôle de signature, d'un logiciel non vérifié téléchargé sur le circuit dans ledit premier mode d'exploitation ;
le réglage dudit mode d'exploitation de processeur sur ledit deuxième mode d'exploitation de processeur lorsqu'un logiciel non vérifié à télécharger n'a pas été authentifié à ladite étape d'authentification
ce qui permet au dit au moins un processeur d'exécuter le logiciel non vérifié téléchargé dans le circuit.

7. Procédé destiné à assurer la sécurité de données selon la revendication 6, comprenant en outre l'étape de :
le contrôle de la période de temps au cours de laquelle le processeur se trouve dans ledit deuxième mode d'exploitation au moyen d'une temporisation.

8. Procédé destiné à assurer la sécurité de données selon l'une quelconque des revendications 6 et 7, comprenant en outre l'étape de :
l'indication du mode d'exploitation dans lequel se trouve le processeur.

9. Procédé destiné à assurer la sécurité de données selon l'une quelconque des revendications 6 à 8, dans lequel le réglage dudit processeur dans l'un d'au moins deux modes d'exploitation modifiables différents est effectué au moyen d'un programme d'application.

10. Procédé destiné à assurer la sécurité de données selon l'une quelconque des revendications 6 à 9, dans lequel le circuit contenant au moins un processeur et au moins un circuit de stockage est compris dans un terminal de télécommunications mobiles.
